# EUROPÄISCHE PATENTANMELDUNG

(11) **EP 2 065 709 A1**
(43) Veröffentlichungstag der Anmeldung: **03.06.2009**
(21) Anmeldenummer: 08170519.6
(22) Anmeldetag: 10.01.2002
(51) Int. Cl.: G01N 35/00

(54) **Vorrichtung für den Transport von Gefässen zu einer Messeinrichtung**

(30) Priorität: 10.01.2001 DE 10100984
(62) Teilanmeldung aus: 02075152.5
(71) Anmelder: Mettler-Toledo AG, 8606 Greifensee (CH)
(72) Erfinder: Lüchinger, Paul, 8610 Uster (CH)

(57) **Zusammenfassung**

Der Transport einer Haltevorrichtung (10) erfolgt mittels einer Transportvorrichtung (1) zu einer Messeinrichtung, wobei in der Haltevorrichtung (10) Gefässe (13) selbstzentrierend und einzeln handhabbar, in definiertem Abstand voneinander gehaltert sind. Die Haltevorrichtung (10) ist auf der Transportvorrichtung (1) transportierbar ausgestaltet und verfügt über Mittel zur Dämpfung der Gefässe (13) in Bezug auf eine auf die Gefässe (13) einwirkende Auslenkung aus der Gleichgewichtslage. Die Transportvorrichtung (1) ist mit Mitteln zur aufeinanderfolgenden Übergabe der Gefässe (13) an die Messeinrichtung ausgestattet, wobei gleichzeitig mit dem Entfernen eines Gefässes (13) von der Messeinrichtung die Zuführung des nächsten Gefässes (13) an die Messeinrichtung erfolgt.

## Beschreibung

Die Erfindung betrifft eine Vorrichtung für den Transport von Gefässen zu einer Messeinrichtung.

Pipetten sind Instrumente zur Übertragung von Messflüssigkeiten von Gefäss zu Gefäss und kommen insbesondere in Laboratorien zur Anwendung. Oft stehen Pipettierungen am Anfang einer Reihe analytischer Untersuchungen, wobei das Arbeiten mit Mehrkanal-Pipetten sich durch eine besonders hohe Effizienz auszeichnet, da mit deren Hilfe gleichzeitig, parallel die Messflüssigkeit aus einem oder mehreren Gefässen entnommen und entsprechend mehreren Gefässen zugeführt werden kann. Dabei ist es von besonderer Bedeutung, dass alle Kanäle das gleiche Volumen aufnehmen und an die neuen Gefässe abgeben. Entsprechend der Höhe der Anforderungen an die Genauigkeit der übertragenen Flüssigkeitsmenge müssen diese Pipetten, besonders Mehrkanal-Pipetten, mehrere Male im Laufe eines Jahres geprüft werden. Ausserdem verlangen auch Richtlinien und internationale Normen die regelmässige Überprüfung von Pipetten. Diese Überprüfung wird häufig auch als Kalibrierung bezeichnet.

Kolbenbasierte Luftpolsterpipetten, beispielsweise, können oberhalb eines Volumens von 1 µl mittels der gravimetrischen Methode kalibriert werden, wobei das Volumen der Messflüssigkeit (in der Regel destilliertes Wasser) aus deren Gewicht und Dichte ermittelt wird. Dabei sind Einflussparameter, wie Temperatur, Luftdruck und Luftfeuchtigkeit zu überprüfen und im Messresultat zu berücksichtigen. Die entsprechenden Vorschriften sind zum Beispiel im pr-EN 8655 oder ISO/DIS 8655, Teil 6 niedergelegt. Für Pipetten mit einem variablen Volumen erfolgt die Überprüfung anhand von Messungen mit 100%, 50% und mindestens 10% des nominellen Volumens. Bei einer vollständigen Kalibrierung oder Prüfung einer Pipette müssen gemäss Norm zehn oder mehr Pipettierungen pro Volumen durchgeführt werden. Die pr-EN 8655 oder ISO/DIS 8655, Teil 6, Abschnitt 7.3 schreibt vor, dass zur Kalibrierung von Mehrkanal-Pipetten alle Kanäle der Mehrkanal-Pipette mit der Prüfflüssigkeit befüllt werden müssen, wobei jedoch nur die Flüssigkeit des Kanals, der gerade geprüft wird, in das Prüfgefäss auf dem Lastaufnehmer entleert werden darf. Dies bedeutet, jeder Kanal muss einzeln für sich vermessen werden. Unter Berücksichtigung der Vorschriften, die bereits für eine Einkanal-Pipette 30 Befüllungen mit anschliessender Vermessung für einen Kalibriergang fordern, ergeben sich nun für Mehrkanal-Pipetten mit variablem Volumen, mit beispielsweise 12 Kanälen, 360 Befüllungen mit anschliessender Wägung, was oft mehrere Stunden beansprucht.

Eine Vorrichtung zur gravimetrischen Prüfung von Mehrkanal-Pipetten ist in der DE-U1-299 17 940 beschrieben, welche einer Anzahl von Aufnahmen für ein Prüfvolumen, der Anzahl der Kanäle (mindestens zwei) entsprechend, jeweils eine Wägezelle zum Wiegen des Behältnisses oder des Prüfvolumens zuordnet. Für eine Zwölfkanal-Pipette bedeutet dies das notwendige Vorhandensein von zwölf Wägezellen.

Nachteilig bei dieser Ausführung einer Vorrichtung zur gravimetrischen Prüfung von Mehrkanal-Pipetten ist, dass mehrere - nämlich der Anzahl der Pipetten-Kanäle entsprechende - Wägezellen vorhanden sein müssen, welche an sich ebenfalls kalibriert sein müssten. Dies ist jedoch äusserst kostenaufwendig. Darüber hinaus müssen diese Wägezellen noch in relativ kleinen Abständen voneinander positioniert sein, was eine negative Rückwirkung auf die Genauigkeit der Wägung hat, da auf solch kleinem Raum sich allenfalls Wägezellen mit Dehnmessstreifen unterbringen lassen und diese den Genauigkeitsanforderungen für eine Kalibrierung von Pipetten nicht immer genügen. Ausserdem ist es schwierig, zu vermeiden, dass sich infolge der Erwärmung der Wägezellen im Betrieb und dem Wärmeübertrag auf benachbarte Wägezellen, ein Temperaturgradient über die Wägezellenanordnung aufbaut. Im Falle einer Ausfertigung der Vorrichtung zur gravimetrischen Prüfung von Mehrkanal-Pipetten, bei welcher beispielsweise die hochauflösenderen Wägezellen mit elektromagnetischer Kraftkompensation verwendet werden, müssen diese in einem grösseren Abstand voneinander angeordnet sein, als dem Abstand der Messgefässe beim Befüllen entspricht. Für den Transport der Messgefässe zu deren jeweiligem Lastaufnehmer muss dann eine komplexe und aufwendige Gestänge- und Hebelanordnung sorgen. Diese genauere Lösung sowie auch deren komplexe Überwachung und Kalibration verursacht sehr daher hohe Kosten.

Aufgabe der vorliegenden Erfindung ist es daher, eine Vorrichtung zur gravimetrischen Kalibrierung von Mehrkanal-Pipetten zu schaffen sowie eine Vorrichtung für den Transport von Gefässen zur Messeinrichtung, in einfacher Ausgestaltung und ohne Verlust an Präzision der Kalibriermessungen, die darüber hinaus noch kostengünstig ist und den Zeitaufwand für die Kalibration von Mehrkanal-Pipetten auf ein vertretbares Mass reduziert.

Gelöst wird diese Aufgabe mit einer Vorrichtung zur Kalibrierung von Mehrkanal-Pipetten gemäss Anspruch 1

In einer Vorrichtung zur gravimetrischen Kalibrierung von Mehrkanal-Pipetten ist eine Waage, die einen Lastaufnehmer mit einer Halterung für Gefässe aufweist, eine Haltevorrichtung zur Aufnahme von mehreren mittels der zu kalibrierenden Mehrkanal-Pipette befüllbaren Gefässen und eine Transportvorrichtung für den Transport der Haltevorrichtung zum Lastaufnehmer vorhanden. Die Gefässe sind in der Haltevorrichtung in definiertem Abstand voneinander gehaltert. Die Transportvorrichtung ist mit Mitteln zur aufeinanderfolgenden Übergabe der einzelnen Gefässe an den Lastaufnehmer und dem Entfernen der einzelnen Gefässe von dem Lastaufnehmer ausgestattet.

Dadurch, dass diese Vorrichtung lediglich eine einzige Waage enthält, ist die Lösung kostengünstiger und weist durch ihre Einfachheit gegenüber dem Stand der Technik einen geringeren Platzbedarf aus. Es kann daher bei der Ausstattung der Vorrichtung Wert auf die Verwendung einer hochpräzisen Waage gelegt werden, welche über eine übliche Kalibriervorrichtung verfügt, und die den in der Norm beschriebenen hohen Anforderungen an eine Vorrichtung zur Kalibrierung von Mehrkanal-Pipetten gerecht wird. Die Transportvorrichtung und/oder die Haltevorrichtung sind so ausgestaltet, dass die Gefässe auf dem Lastaufnehmer präzise positioniert werden. Die erfindungsgemässe Vorrichtung kann als Zubehör zu einer handelsüblichen Analysenwaage mit hoher Auflösung oder als integriertes System angeboten werden.

In einer bevorzugten Ausgestaltung der Erfindung ist die Transportvorrichtung von einem Gehäuse umgeben, innerhalb dessen die Waage installiert ist. Der Lastaufnehmer ist auf der Waage stehend angeordnet und ragt durch eine Öffnung des Gehäuses in die Haltevorrichtung hinein. Dabei ist der Lastaufnehmer mittels zweier an dem Lastaufnehmer befestigter Seitenflügel, die an ihrem oberen Ende jeweils eine Kerbe aufweisen zur hängenden Aufnahme eines zu wiegenden Gefässes ausgebildet.

Eine vorteilhafte Weiterbildung der Erfindung besteht darin, dass der definierte Abstand dem Abstand der Pipettenspitzen einer zu kalibrierenden Mehrkanal-Pipette entspricht und die Anzahl der in der Haltevorrichtung vorhandenen Gefässe mindestens der Anzahl der Spitzen einer zu kalibrierenden Mehrkanal-Pipette entspricht.

Die für den Transport der Haltevorrichtung zum Lastaufnehmer ausgestaltete Transportvorrichtung ist nicht ausschliesslich auf die Verwendung in einer Vorrichtung zur Kalibrierung von Mehrkanal-Pipetten beschränkt. Sie kann ebenso in einer Haltevorrichtung gehalterte Gefässe einer anderen Messeinrichtung, beispielsweise einem Spektrometer, zuführen.

Dabei ist die Transportvorrichtung zu einer Messeinrichtung mit einer Haltevorrichtung für mit einer Flüssigkeit oder schüttfähigen Festkörpern befüllbare Gefässe versehen, wobei in der Haltevorrichtung die Gefässe selbstzentrierend und einzeln handhabbar gehaltert sind. Die Haltevorrichtung ist auf der Transportvorrichtung transportierbar ausgestaltet und verfügt über Mittel zur Dämpfung der Gefässe in Bezug auf eine auf die Gefässe einwirkende Auslenkung aus der Gleichgewichtslage. Die Transportvorrichtung ist mit Mitteln zur aufeinanderfolgenden Übergabe der Gefässe an die Messeinrichtung ausgestattet, wobei gleichzeitig mit dem Entfernen eines Gefässes von der Messeinrichtung die Zuführung des nächsten Gefässes an die Messeinrichtung erfolgt.

Die Gefässe können einen runden, einen ovalen oder einen rechteckigen Querschnitt aufweisen und sind vorzugsweise in einem definierten Abstand voneinander in der Haltevorrichtung angeordnet, wobei die Haltevorrichtung ein Raster mit Vertiefungen aufweist, in welchen die Gefässe mittels an ihrem oberen Ende befestigten, starren Haltestegen eingreifen.

In einer bevorzugten Ausgestaltung bestehen die Haltestege aus Holmen, die an ihrer Innenseite in einer Art Fassung den Umfang eines Gefässes teilweise umschliessen und, nahe ihrem äusseren Ende, einen Aussen-Konus bilden. Zusätzlich weist mindestens einer der Holmen einen von innen nach aussen sich zunächst erweiternden und dann wieder verjüngenden Doppelkonus auf. Mit dem sich zwischen dem Doppelkonus und dem Aussen-Konus bildenden Einstich greift der Haltesteg in die Vertiefungen des Rasters ein.

Eine besonders vorteilhafte Weiterbildung der Erfindung sieht vor, dass die Haltevorrichtung von der Transportvorrichtung trennbar ausgebildet ist.

Zur Vermeidung von Verschmutzung und zur Reduktion der Verdunstung weist die Haltevorrichtung einen Deckel auf. Ausserdem besitzt sie in der Nähe der Öffnungen zum Befüllen der Gefässe mindestens eine mit Prüfflüssigkeit befüllbare Wanne, womit eine weitere Verringerung der Verdunstung mittels Sättigung der umgebenden Luft erreicht wird. Der Vermeidung von Windeinfluss, insbesondere auch auf den Lastaufnehmer der Vorrichtung für die Kalibrierung von Mehrkanal-Pipetten, dienen Mittel zum Abdichten beim Aufsetzen der Haltevorrichtung auf eine flache Unterlage, über die diese an ihrer Unterseite verfügt.

In einer weiteren vorteilhaften Ausgestaltung der Erfindung ist die Transportvorrichtung für die Ausführung einer Vorwärts- und/oder einer Rückwärtsbewegung und gleichzeitig einer Heb- und Senkbewegung der Haltevorrichtung ausgebildet, wobei ein einziger Antrieb, der von einem einzigen Motor aus erfolgt, in der Transportvorrichtung vorhanden ist.

Eine vorteilhafte Ausführungsform der Erfindung sieht vor, dass die Transportvorrichtung einen Schlitten und eine Transportbahn, in welcher sich der Schlitten bewegt, aufweist und, dass im Schlitten eine Aufnahme für die Haltevorrichtung vorhanden ist. Zur Führung des Schlittens besitzt die Transportvorrichtung mindestens ein Transportraster. Die Transportvorrichtung verfügt vorzugsweise über einen Positionssensor zur Feststellung der aktuellen Stellung der Haltevorrichtung oder des Schlittens in der Transportvorrichtung.

In einer bevorzugten Ausgestaltung der Erfindung ist die Transportvorrichtung von einem Gehäuse umgeben und der Antrieb ist am Gehäuse befestigt. Dieser weist ein Antriebsrad mit mindestens zwei Bolzen sowie eine am Schlitten oder an der Haltevorrichtung angebrachte bogenförmige Antriebsrasterung auf, wobei die Bolzen in die Antriebsrasterung eingreifbar ausgebildet sind. Dabei besitzen die Antriebsrasterung, das Transportraster und das Raster der Haltevorrichtung die gleiche Periode.

Die Haltevorrichtung kann mittels der Transportvorrichtung auf einer linearen Bahn oder auf einer kreisförmigen Bahn geführt werden, wobei im letzteren Falle auch bereits die Haltevorrichtung kreisförmig in der Art eines runden Magazins ausgebildet sein kann.

Eine Weiterbildung der Erfindung sieht vor, dass die Gefässe, beispielsweise an ihrem Boden, einen Code aufweisen und in der Transportvorrichtung ein Sensorkopf angeordnet ist und dass Mittel zum Übermitteln des Codesignals vom Code zum Sensorkopf vorhanden sind und/oder dass die Haltevorrichtung einen Code aufweist und an der Transportvorrichtung in gleicher Höhe mit dem Code eine Sensoreinrichtung angeordnet ist.

Bevorzugte Ausgestaltungen der erfindungsgemässen Vorrichtung zur gravimetrischen Kalibrierung von Mehrkanal-Pipetten und der Vorrichtung für den Transport von Gefässen zur Messeinrichtung sowie deren Funktionsweise ergeben sich aus den anhand der Zeichnungen beschriebenen Details. Es zeigen:
- Fig. 1: eine Gesamtansicht der erfindungsgemässen Transportvorrichtung in perspektivischer Darstellung,
- Fig. 2: eine bevorzugte Ausführungsform einer Haltevorrichtung für die Aufnahme der Gefässe in perspektivischer Darstellung,
- Fig. 3: A bis D: Gefässe mit verschiedenem Querschnitt und jeweils entsprechenden Haltestegen aus der Sicht von oben,
- Fig. 4: eine andere Ausführungsform der Haltestege, insbesondere für schmale Gefässe in perspektivischer Sicht,
- Fig. 5: eine bevorzugte Ausgestaltung des Transportrasters mit Schlitten in perspektivischer Sicht mit voneinander beabstandet gezeichneten Teilen,
- Fig. 6: eine Ausgestaltung des Lastaufnehmers mit eingehängtem Gefäss, innerhalb der Haltevorrichtung im Schnitt,
- Fig. 7: eine bevorzugte Ausführungsform des Antriebs, am unteren Wendepunkt der Transport-Bewegung, in perspektivischer Sicht,
- Fig. 8: das Zusammenwirken von Transportvorrichtung und Lastaufnehmer in einer Ausschnitts-Zeichnung von der Seite,
- Fig. 9: die Haltevorrichtung mit eingehängtem Gefäss beim Befüllen, im Schnitt,
- Fig. 10: die Integration einer Einrichtung zur Code-Erfassung nahe dem Lastaufnehmer, wobei die Codes am Boden der Gefässe angebracht sind,
- Fig. 11: die Transportvorrichtung mit auf der Haltevorrichtung aufgebrachtem Bar-Code und an der Transportvorrichtung installiertem Barcode-Lesegerät, in perspektivischer Darstellung.

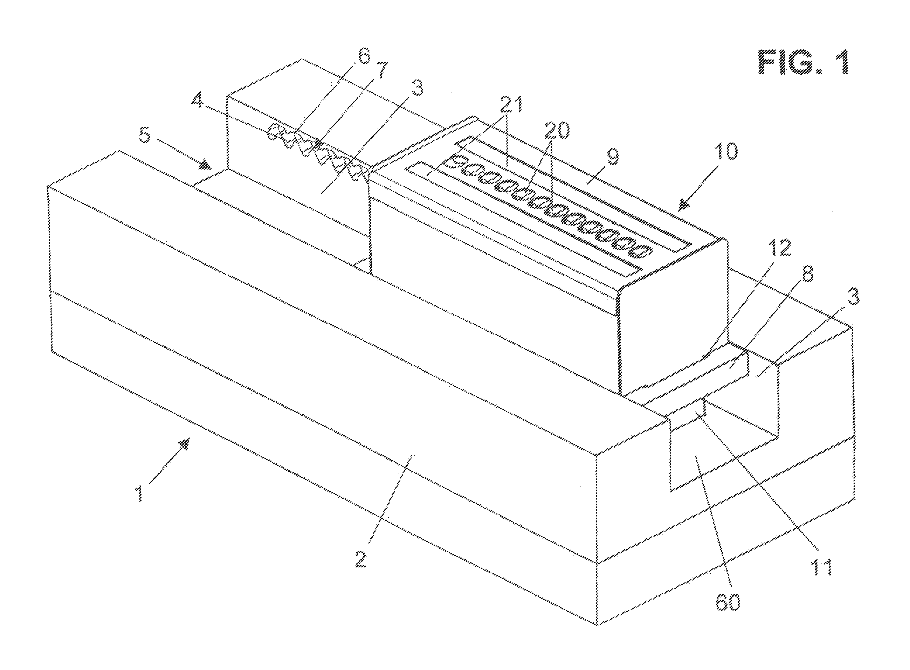

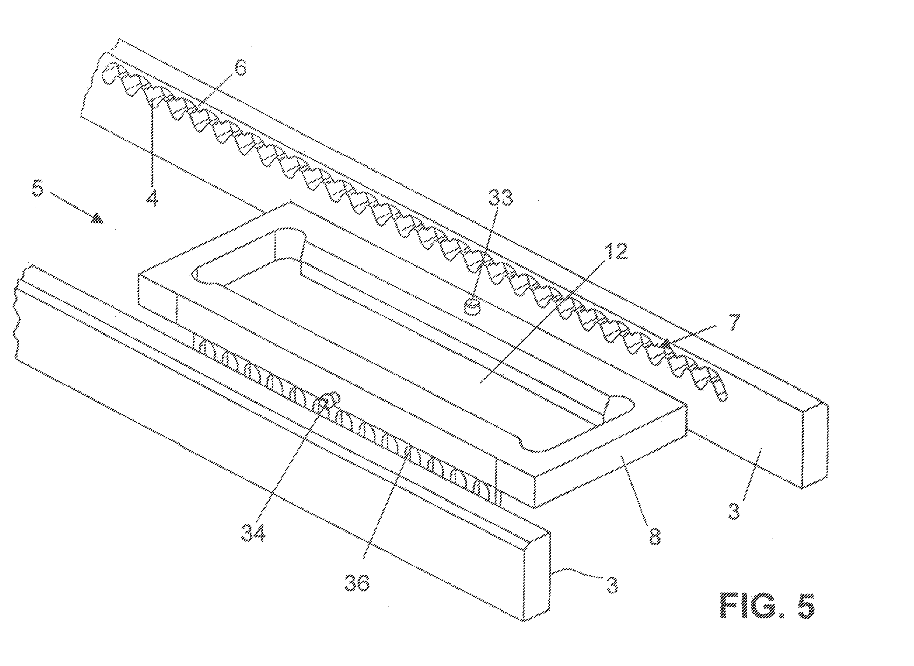

Eine Vorrichtung zur gravimetrischen Kalibrierung von Mehrkanal-Pipetten besteht aus einer elektronischen Waage mit einem Lastaufnehmer, einer Haltevorrichtung und einer Transportvorrichtung, wie sie Figur 1 zeigt. Die Transportvorrichtung 1 ist von einem Gehäuse 2, mit einer in dessen Mitte längs verlaufenden Transportbahn 5, umgeben. An beiden seitlichen Innenwänden 3 der Transportbahn 5 ist nahe der oberen Kante ein Transportraster 7 angebracht. Dieses ist an seiner Unterseite 4 etwa sinusförmig, mit abgeflachten Maxima ausgestaltet und kann beispielsweise in die, in einem solchen Falle etwas dicker ausgebildete Innenwand 3 eingefräst sein oder in eine in die Innenwand 3 eingelassene Gleitschiene. Nach oben wird das Transportraster 7 von einem Bogenraster 6 begrenzt, wobei die Bogenscheitel über den Maxima der sinusförmigen Unterseite 4 liegen. In der Transportbahn 5, in Verbindung mit dem Transportraster 7 bewegbar, wie weiter unten anhand der Figur 5 näher beschrieben ist, befindet sich ein Schlitten 8, in welchen eine Haltevorrichtung 10 eingesetzt ist. Die Haltevorrichtung 10, welche auch als Rack bezeichnet werden könnte, ist in ihrem unteren Bereich 11, quer zur Transportbahn schmäler ausgestaltet und kann dadurch passgenau in einer Aufnahme 12 des Schlittens 8 eingesteckt werden. Dabei bedarf es keiner weiteren speziellen Befestigungseinrichtung, um die Haltevorrichtung 10 auf dem Schlitten 8 zu haltern. Der Haltevorrichtung 10 ist ein Deckel 9 aufgesetzt.

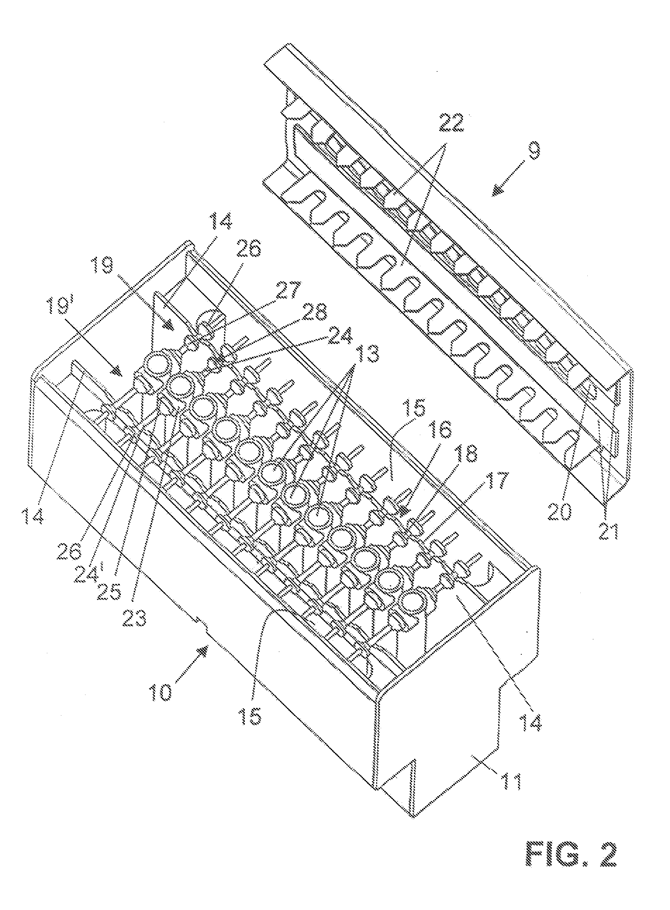

In Figur 2 ist die Haltevorrichtung 10, welche die mit dem Prüfmedium zur Kalibrierung einer Mehrkanal-Pipette (in der Regel Wasser) befüllbaren Gefässe 13 enthält, in perspektivischer Sicht von schräg oben dargestellt. Weiterhin zeigt Figur 2, ebenfalls in perspektivischer Sicht von der Unterseite, den Deckel 9. Die Haltevorrichtung 10 besteht aus einem länglichen T-förmigen, dreifach unterteilten Kasten, dessen beide Seitenwände 14 seines unteren Bereichs 11 bis nahe an den oberen Rand der Haltevorrichtung 10 reichen. Dort sind rechts und links jeweils ausserhalb der beiden Seitenwände 14 Wannen 15 angebracht, die mit dem Prüfmedium (in der Regel Wasser) befüllt, oder auch mit einem wassergesättigten Schwamm, der Sättigung des Luftvolumens in der Haltevorrichtung 10 mit Feuchtigkeit dienen und somit der Verdunstung des in den Gefässen 13 enthaltenen Prüfmediums entgegenwirken. Ein nahe der Wannen 15 installierter Feuchtesensor (hier nicht gezeigt) kann Aufschluss über die Wirksamkeit dieser Einrichtung geben. Beide oberen Kanten der Seitenwände 14 besitzen je ein Dreiecksraster 16, wobei dessen Spitzen 17 und Vertiefungen 18 sich jeweils auf gleicher Höhe befinden und parallel zueinander verlaufen. Die Dreiecksraster 16 dienen der Aufnahme der Gefässe 13, wobei diese hängend mittels Haltestegen 19, 19' beidseitig in die Vertiefungen 18 eingebracht sind. Auf diese Weise sind mehrere Gefässe 13 hintereinander in der jeweils nächsten Vertiefung der Dreiecksraster 16 in regelmässigem Abstand voneinander angeordnet. Die Haltevorrichtung 10 ist nach unten offen. Wird die Haltevorrichtung 10 jedoch auf einer ebenen Fläche abgestellt, beispielsweise am Boden 60 (siehe Figur 1) der Transportbahn 5, so ist sie abgeschlossen und verhindert den Luft- und damit auch den Feuchtigkeitsaustausch mit ihrer Umgebung.

Die Gefässe 13 bestehen vorzugsweise aus Glas und besitzen eine längliche Form mit einem runden Öffnungsquerschnitt. Es können hierzu beispielweise Standard-Reagenzgläser verwendet werden oder in gewissen Anwendungsfällen auch Polymergefässe. Die Länge der Gefässe 13 ist beliebig, solange sie in die Haltevorrichtung 10 passend eingehängt werden können. An ihrem oberen Ende nahe der Öffnung zum Befüllen der Gefässe 13 sind auf beiden Seiten eines Gefässes 13 starre Haltestege 19, 19' einander gegenüberliegend befestigt. Die Haltestege 19, 19' sind für beide Seiten verschiedenartig ausgestaltet. Auf der einen Seite besteht der Haltesteg 19' aus einer den Umfang eines Gefässes 13 teilweise umschliessenden Fassung 23, die über einen Innen-Konus 25 in einen stegförmigen Holmen 24' übergeht und nahe seinem äusseren Ende einen Aussen-Konus 26 besitzt. Der Holmen 24' liegt in einer Vertiefung 18 des Dreiecksrasters 16 direkt im Bereich der beginnenden Erweiterung zum Aussen-Konus 26 auf.

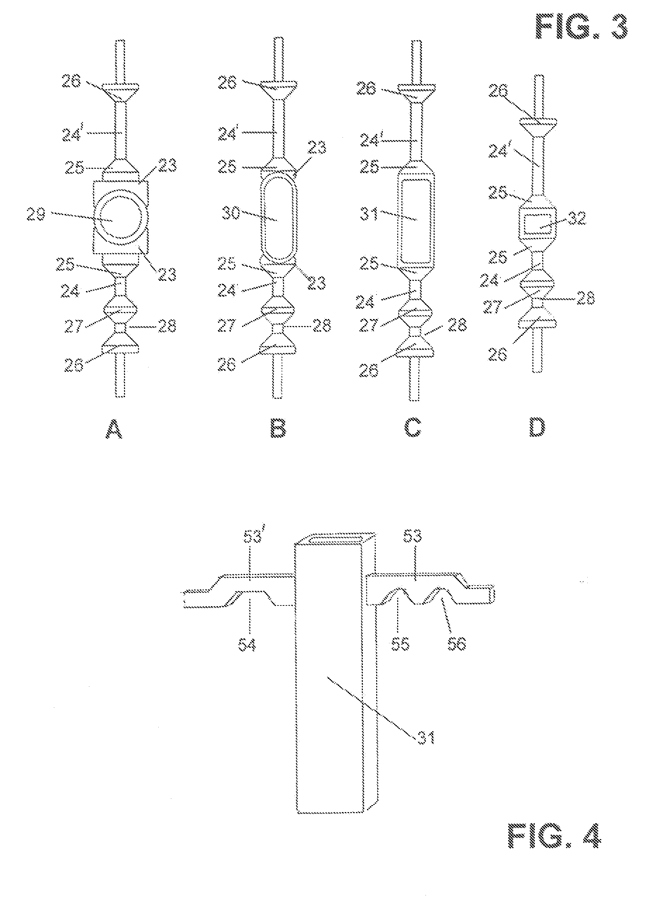

Auf der gegenüber liegenden Seite ist der Haltesteg 19 nahezu gleich ausgebildet, wie der Haltesteg 19', besitzt jedoch zusätzlich etwa in der Mitte des Holmens 24 einen von innen nach aussen sich zunächst erweiternden und dann wieder verjüngenden Doppelkonus 27, wobei sich diesem nach aussen der Aussen-Konus 26 anschliesst. Der Doppelkonus 27 bildet zusammen mit dem Aussen-Konus 26 einen Einstich 28, der nicht notwendigerweise rotationssymmetrisch in Bezug auf den Holmen sein muss, wie weiter unten anhand der Figur 4 dargestellt ist. Mit dem Einstich 28 greift der Haltesteg 19 in eine Vertiefung 18 des Dreicksrasters 16 ein und wird dort geführt. Durch die Reibung, die der Einstich 28 in der spitz zulaufenden Vertiefung 18 erfährt, werden die Gefässe 13 bei einer beispielsweise von aussen induzierten Pendelbewegung entlang der Richtung der Aufreihung der Gefässe 13 stark gedämpft. Die Gefässe 13 sind mit geringst möglichem Abstand voneinander, berührungsfrei angeordnet. Bei einer Auslenkung der Gefässe 13 aus ihrer senkrechten Lage in eine Schräglage, beispielsweise wenn die Haltevorrichtung 10 schräg gestellt wird, bewirkt die Aufhängung, dass die Gefässe 13 sich auch weiterhin in Parallellage befinden und berührungsfrei zueinander angeordnet sind.

Die so gebildeten Haltestege 19, 19' sind vorzugsweise aus Metall gefertigt und können beispielsweise an die Gefässe 13 angeklebt sein. Es sind jedoch auch Ausführungen der Gefässe 13 denkbar, die als gesamte Einheit (Gefäss und Haltestege) im Spitzgussverfahren aus Polymermaterial hergestellt sind. Dabei ist es nützlich, insbesondere die Polymergefässe aussen mit einer leitenden Schicht zu versehen, um eine störende elektrostatische Aufladung zu vermeiden.

Eine seitliche Auslenkung der in der Haltevorrichtung 10 hängenden Gefässe 13, wie sie sich beispielsweise beim Befüllen mittels einer Mehrkanal-Pipette und dem notwendigen Abstreifen der Pipettenspitzen an den Gefässrändern ergeben kann, erweist sich als unproblematisch. Die Haltestege 19, 19' erfahren bei einer seitlichen Auslenkung im Bereich ihres Eingriffs in die Vertiefung 18 des Dreiecksrasters 16 ein Verschieben entlang dem Mantel eines Aussen-Konus 26, wobei nach Entfernen der Pipette sie selbstzentrierend rasch wieder in ihre Gleichgewichtslage gelangen.

Die Haltevorrichtung 10 mit der beschriebenen Aufhängung der Gefässe 13 stellt, zusammen mit der Transportvorrichtung 1, ein System für den automatischen Transport mit berührungsfreier, selbstzentrierender Aufhängung der zu transportierenden Gefässe 13 dar. Die Gefässe 13 können mit einer Flüssigkeit oder mit schüttfähigen Festkörpern befüllt sein. Bei der Zuführung der Gefässe 13 zu einer Messeinrichtung sind diese einzeln handhabbar und können an die Messeinrichtung nacheinander übergeben werden und wieder von dieser entfernt werden, wobei das Entfernen gleichzeitig mit der Übergabe des folgenden Gefässes 13 an die Messeinrichtung erfolgt. Durch die Halterung der Gefässe 13 mittels des Einstichs 28 als besonderem Lager in Form eines Doppel-V, welches sich aus dem Zusammenwirken von Dreiecksraster 16, Doppelkonus 27 und Aussen-Konus 26 ergibt, erfahren sie eine hohe Dämpfung in Bezug auf eine beispielsweise von aussen einwirkende Auslenkung aus der Gleichgewichtslage. Somit ist eine präzise Positionierung der Gefässe 13 auf einer Messeinrichtung möglich und ausserdem wird vermieden, dass Messgut verschüttet wird.

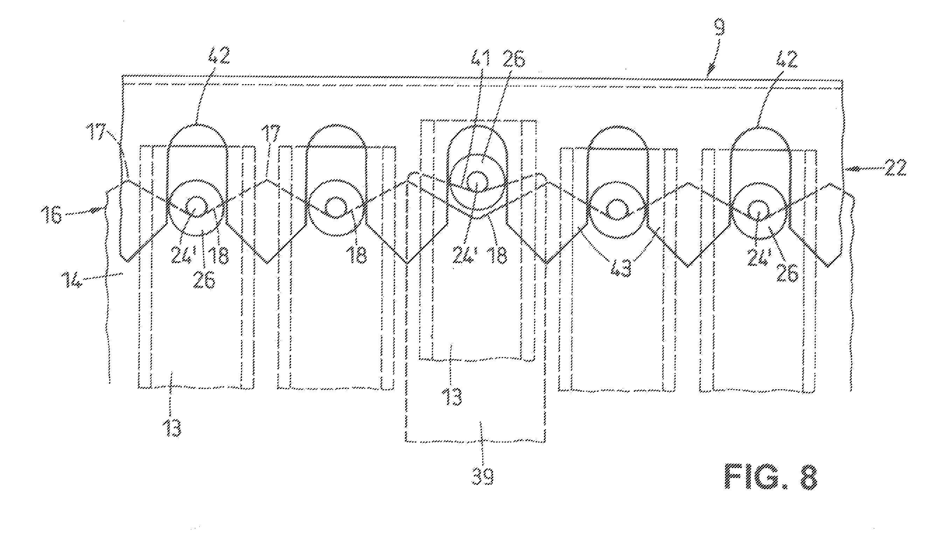

Wie die Figur 2 weiter zeigt, kann die Haltevorrichtung 10 mit einem Deckel 9 verschlossen werden, wobei der Deckel 9 seinerseits wiederum mit verschliessbaren Öffnungen 20 zum Befüllen der Gefässe 13 versehen ist (siehe auch Figur 1). Für die mit Wasser befüllten Wannen 15 ist der Deckel 9 mit je einer Glasscheibe als Sichtfenster 21 versehen. Der Deckel 9 übernimmt ausser seiner Schutzfunktion gegen Verschmutzung und Verdunstung des Prüfmediums noch die Funktion einer Sicherung gegen ein Herauskippen der Gefässe 13 aus den Vertiefungen 18 der Dreiecksraster 16, wenn beispielsweise eine seitliche Auslenkung mit zu grosser Amplitude erfolgt, oder die Haltevorrichtung 10 durch den Benutzer transportiert und/oder unsanft abgestellt wird. Hierfür besitzt der Deckel 9 je ein Zahnraster 22 auf seiner Unterseite, welches beim Aufsetzen des Deckels 9 ausserhalb der Seitenwände 14 der Haltevorrichtung 10 zwischen die Holmen 24, 24' eingreift. Das Zusammenwirken von Dreiecksraster 16 und Zahnraster 22 ist in Figur 8 illustriert und wird weiter unten detailliert beschrieben.

Weitere Ausführungsformen der Gefässe und Haltestege sind in der Figur 3 in Aufsicht dargestellt. Dabei kann es sich um kurze rechteckige Gefässe 32 (Fig. 3D), um längliche rechteckige Gefässe 31 (Fig. 3C) oder um Gefässe mit ovalem 30 (Fig. 3B) oder rundem 29 (Fig. 3A) Querschnitt handeln. Die jeweiligen Haltestege 19, 19' sind in ihrer Ausführung der Form und Grösse der Gefässe angepasst. Der im Bereich der Handpipetten heute gängige Spitzenabstand von 9 mm lässt hinsichtlich der Form des Gefäss-Querschnitts eine vielfältigere Ausgestaltung der Gefässe zu, als beispielweise ein 4,5-mm-Spitzenabstand, wie er im Bereich der automatisierten Pipetten immer mehr dem Standard entspricht. Doch auch dem können die besonderen Ausgestaltungsmöglichkeiten der Gefässe Rechnung tragen. Allerdings sind auch andere, von der Rotationssymmetrie abweichende Formen der Haltestege denkbar, die besonders dann zum Tragen kommen, wenn eine Anpassung der Gefäss-Abstände auf Mehrkanal-Pipetten mit kleinem Spitzenabstand, zu erfolgen hat. Es versteht sich von selbst, dass die Periode des Rasters 16 der Haltevorrichtung 10, das im Übrigen auch von der Dreiecksform abweichen kann, den Abstand der Gefässe definiert und somit dem Abstand der Spitzen einer zu kalibrierenden Mehrkanal-Pipette entspricht.

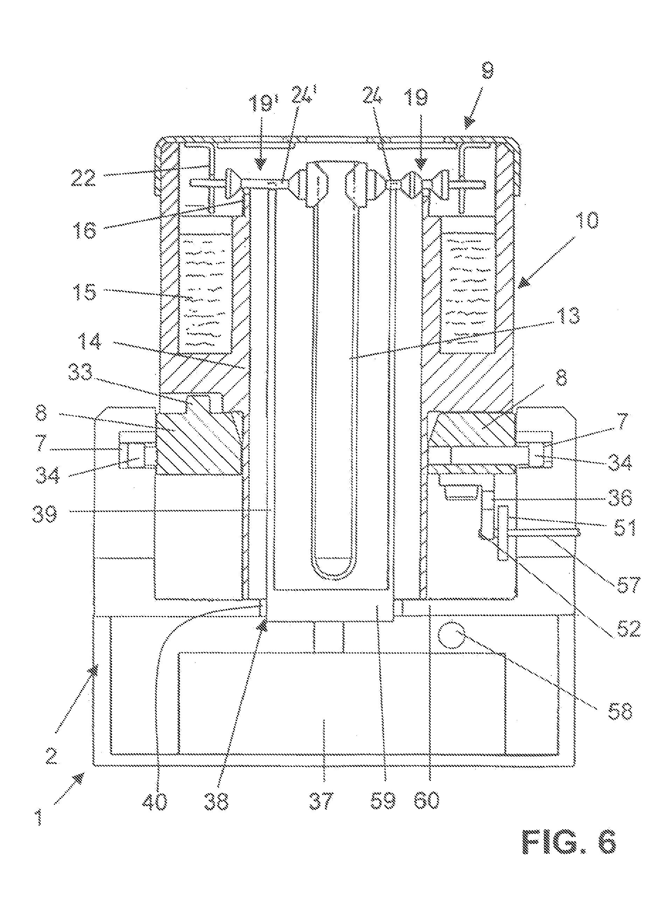

Die Figur 4 zeigt ein Beispiel eines schmalen, länglichen rechteckförmigen Gefässes 31 in dreidimensionaler Darstellung. Die Haltestege - hier mit den Bezugszeichen 53, 53' - haben einen rechteckigen Querschnitt und weisen auf der einen Seite einen trapezförmigen Einschnitt 54 und auf der anderen Seite zwei nebeneinander liegende, vorzugsweise ebenfalls trapezförmige, etwas schmalere Einschnitte 55, 56 auf. Mit dem Einschnitt 54, an dessen äusserem Ende, sowie dem Einschnitt 56 wird das Gefäss 31 in die Haltevorrichtung 10 eingehängt. Der Einschnitt 55 sowie das innere Ende des Einschnitts 54 sind dafür vorgesehen, dass ein mit der Waage verbundener Lastaufnehmer darin eingreift, wie weiter unten anhand der Figuren 6 und 8 näher erläutert wird. Die Haltestege 53, 53' verschmälern sich an ihren äusseren Enden. Auch diese Form der Haltestege 53, 53', wie noch eine Vielzahl weiterer denkbarer Ausführungsformen bewirkt eine stabile selbstzentrierende Lagerung mit hoher Dämpfung der Gefässe 31 in der Aufnahme einer Haltevorrichtung 10. Wichtig ist es, das Raster der Haltevorrichtung 10 und die Einstiche 28 derart aufeinander abzustimmen, dass ihre Reibung weder so gross ist, dass damit jegliche Beweglichkeit der eingehängten Gefässe verhindert wird, noch so klein ist, dass die Gefässe in der Lage sind, eine Pendelbewegung auszuführen.

Die Figur 5 zeigt den bewegbaren Schlitten 8 in der Transportbahn 5, deren seitliche Innenwände 3, hier in der Art einer Explosionszeichnung, auseinander gerückt gezeichnet sind. Die Aufnahme 12 ist in Verbindung mit dem Stift 33 derart ausgestaltet, dass in ihr die Haltevorrichtung 10 ohne zusätzliche Befestigungsmittel in eindeutiger Position gehaltert werden kann. Anhand von mindestens drei Fortsätzen 34, wobei beispielsweise zwei auf einer Seite und einer auf der gegenüberliegenden Seite in die Transportraster 7 eingreifen, wird der Schlitten 8 in der Transportbahn 5 auf einer Art Berg- und Talfahrt geführt. Die Fortsätze 34 sind beispielsweise Bestandteil von mittels eines Kugellagers im Schlitten 8 drehbar gelagerten Achsen und stehen jeweils nahe dem vorderen und dem hinteren Ende des Schlittens 8, beziehungsweise in dessen Mittelbereich seitlich aus diesem vor. Durch die spezielle Form des Transportrasters 7 mit einer etwa sinusförmig ausgestalteten Unterseite 4 und insbesondere einem nach oben begrenzenden Bogenraster 6, dessen Bogenscheitel über den Maxima der Unterseite 4 liegen, wird ein Verkanten des Schlittens 8 und/oder ein aus der Bahn geraten des Schlittens 8 ausgeschlossen.

Die Rasterperiode des Transportrasters 7 entspricht der Periode des Rasters 16 in der Haltevorrichtung 10 und damit dem Abstand der Spitzen einer zu kalibrierenden Mehrkanal-Pipette.

Ein weiterer Vorteil des speziellen Transportrasters 7 ergibt sich daraus, dass die Vorwärtsbewegung des Schlittens 8 und damit der Haltevorrichtung 10 bei gleichzeitiger Auf- und Ab Bewegung mittels eines einzigen Antriebs erfolgen kann.

Dieser Antrieb ist einerseits mit der Transportvorrichtung 1 an einer der seitlichen Innenwände 3 verbunden und andererseits an der Unterseite des Schlittens angebracht. In der Figur 5 ist die zum Antrieb gehörende bogenförmige Antriebsrasterung 36 - die gleiche Periode, wie das Transportraster 7 und das Dreiecksraster 16 aufweisend - auf der dem Betrachter zugewandten Seite des Schlittens 8 zu sehen. Bevorzugt verfügt die Transportvorrichtung 1 über einen Positionssensor (hier nicht gezeigt), zur Feststellung der aktuellen Stellung der Haltevorrichtung 10 in der Transportvorrichtung 1

Die gesamte Haltevorrichtung 10 mit den darin gehalterten Gefässen 13 wird mittels des Schlittens 8 vorwärts bewegt auf eine im unteren Bereich des Gehäuses 2, etwa mittig der Transportbahn 5, installierte Waage 37 zu. Wie Figur 6 zeigt, ist auf der Waage 37 stehend, durch eine Öffnung 40 im Boden 60 der Transportbahn 5 durch das Gehäuse 2 hindurchragend, der zur hängenden Halterung der Gefässe 13 ausgebildete Lastaufnehmer 38 angebracht. Der Lastaufnehmer 38 weist einen Boden 59 auf, an welchem beidseitig jeweils ein Seitenflügel 39 angebracht ist. Ein Gefäss 13 ist hier mittels der Holmen 24, 24' an den beiden, in Bezug auf das Dreiecksraster 16 der Haltevorrichtung 10 weiter innen liegenden Seitenflügeln 39 des Lastaufnehmers 38 eingehängt. Im Betrieb ist die Haltevorrichtung 10 mit dem Deckel 9 verschlossen und die beiden seitlichen Wannen 15 sind mit Wasser befüllt. Weiterhin zeigt die Figur 6 noch beidseitig das Eingreifen der den Schlitten 8 in der Transportbahn 5 führenden Fortsätze 34 in die Transportraster 7. Auf der rechten Seite ist zusätzlich, als Teil des Antriebs, die Antriebsrasterung 36 zu sehen sowie ihr Eingreifen in einen an einem Antriebsrad 51 befestigten Bolzen 52. Das Antriebsrad 51 ist über eine Achse 57 mit einem Zahnrad (hier nicht gezeigt) verbunden, wobei das Zahnrad, in ein Schneckengewinde (hier nicht gezeigt) eingreifend, die Verbindung des Antriebs zum ebenfalls hier nicht gezeigten Motor herstellt.

Die Waage 37 befindet sich innerhalb des Gehäuses 2 der Transportvorrichtung 1 und wird somit gegen Zugluft geschützt. Der Lastaufnehmer 38 befindet sich innerhalb der Haltevorrichtung 10 und wird während der Wägung durch die Seitenwände 14 der Haltevorrichtung 10 gegen Zugluft geschützt, wenn sich die Haltevorrichtung 10 an ihrem tiefsten Punkt der für den Wägevorgang unterbrochenen Transportbewegung befindet, wobei die Seitenwände 14 den Boden 60 der Transportbahn 5 berühren.

Nahe der Waage 37 kann ein Drucksensor 58 und/oder ein Temperatursensor angebracht werden, um die für die Ermittlung der Dichte des Prüfmediums notwendigen Umgebungsparameter zu überwachen.

Die Transportvorrichtung 1 wird von einem einzigen Motor angetrieben, welcher im Gehäuse 2 der Transportvorrichtung 1 seitlich unterhalb des Transportrasters 7 untergebracht ist. Der Antrieb ist derart ausgestaltet, dass er gleichzeitig den Schlitten 8 vorwärts oder rückwärts sowie auf- und ab bewegen kann.

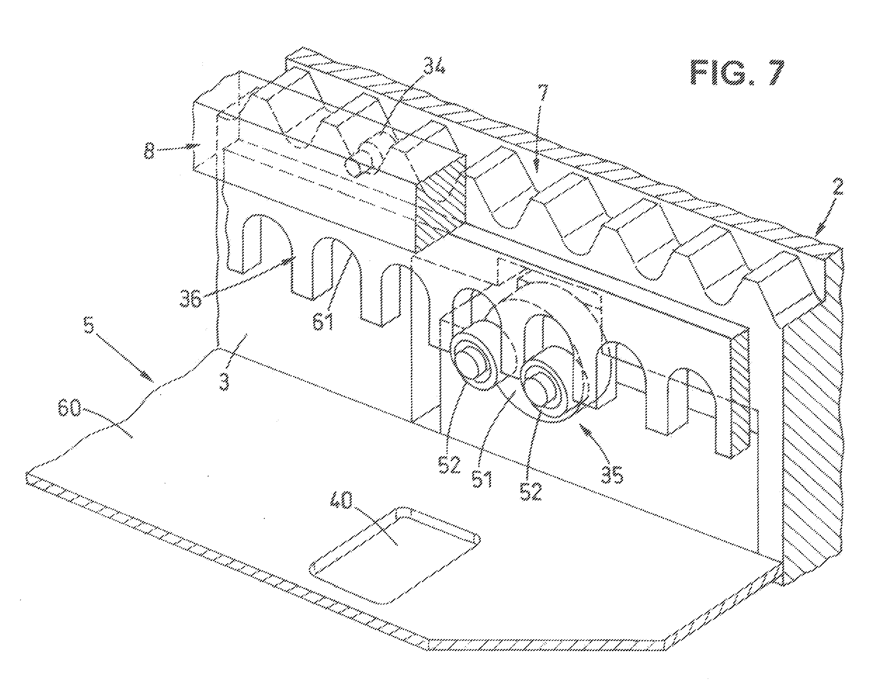

Die Figur 7 zeigt eine perspektivische Sicht von der Transportbahn 5 auf den Antrieb 35 und das Transportraster 7 sowie deren Zusammenwirken. Im Vordergrund ist die Öffnung 40 für den Durchgang des Lastaufnehmers 38 durch den Boden 60 der Transportbahn 5 zu sehen. Das Antriebsrad 51 befindet sich mit seinen zwei in gleichem Abstand von der Achse 57, einander gegenüber liegenden, drehbar gelagerten Bolzen 52 im Eingriff mit der Antriebsrasterung 36. Der den Schlitten 8 führende Fortsatz 34 liegt in einem Minimum im Transportraster 7 auf. Grösse und Abstand der Bolzen 52 ist so bemessen, dass sie gerade in zwei aufeinanderfolgende Bogen 61 der Antriebsrasterung 36 passend eingreifen können. Im Verlauf einer Periode der Auf- und Ab- Bewegung bei gleichzeitiger Vorwärtsbewegung um eine Rastereinheit stehen nun, wie in der Figur 7 gezeigt, die beiden Bolzen 52 waagrecht nebeneinander, und die Antriebsrasterung 36 - und damit der Schlitten 8 - befinden sich in ihrer jeweils tiefsten Lage. In dieser Position findet die Wägung statt. Dreht sich nun das Antriebsrad 51, so entfernt sich einer der Bolzen nach unten aus der Antriebsrasterung 36 und der andere Bolzen 52 greift nach oben tiefer in den Bogen 61 ein, um dabei den Schlitten 8 vorwärts zu treiben und gleichzeitig, dem sinusförmigen Transportraster 7 folgend, anzuheben. Der Fortsatz 34 gleitet entlang dem Transportraster 7 nach oben und befindet sich an dessen Maximum, wenn die beiden Bolzen 52 senkrecht übereinander stehen. In dieser Position findet der Austausch der Gefässe 13 zwischen dem Lastaufnehmer 38 und der Haltevorrichtung 10, wie nachstehend beschrieben, statt.

Anhand der Figur 8 ist das Zusammenwirken von Transportvorrichtung 1, Haltevorrichtung 10 und Lastaufnehmer 38 im Ausschnitt einer Seitenansicht dargestellt. Der Lastaufnehmer 38 weist beidseitig am oberen Ende seiner beiden Seitenflügel 39 eine V-förmige Kerbe 41 zur Halterung der zu wiegenden Gefässe 13 auf. Weiterhin ist die Sicherung der Gefässe 13 gegen ein Herausfallen aus der Haltevorrichtung 10 mittels des im Deckel 9 befindlichen Zahnrasters 22 erkennbar.

Wenn sich die Antriebsrasterung 36 und damit der Schlitten 8 und die mit diesem verbundene Haltevorrichtung 10 in ihrer jeweiligen unteren Position befinden, reichen die Seitenflügel 39 des Lastaufnehmers in ihrer Höhe um ca. 2 mm über die Dreiecksraster 16 der Seitenwände 14 der Haltevorrichtung 10 hinaus. Seine Kerben 41 sind, verglichen mit dem Abstand zwischen Vertiefungen 18 und Spitzen 17 des Dreiecksrasters 16, um 1 bis 2 mm geringer ausgeprägt. Damit ergibt sich folgendes Vorgehen für das fortlaufende Einhängen eines neuen Gefässes 13 in den Lastaufnehmer 38. Die Haltevorrichtung 10 wird mittels des Antriebs, wie oben anhand der Figur 7 beschrieben, nach oben und vorwärts bewegt. Infolge der Hubbewegung gelangt die Vertiefung 18 des Dreiecksrasters 16 wenig höher als die äussere Kante der Seitenflügel 39 des Lastaufnehmers 38. Bei der nächsten Abwärtsbewegung der Haltevorrichtung 10 nimmt der Lastaufnehmer 38 das Gefäss an seinen Holmen 24, 24' (auf der einen Seite innerhalb des Doppelkonus) auf und die Holmen 24, 24' gleiten in die tiefste Stelle der Kerben 41. Das Gefäss 13 befindet sich nun frei hängend auf dem Lastaufnehmer 38 und steht einer Wägung zur Verfügung. Gleichzeitig mit dem Transport eines Gefässes 13 auf den Lastaufnehmer 38 wird das sich zuvor in dem Lastaufnehmer 38 befindliche Gefäss 13 aus diesem wieder entfernt, indem die Haltevorrichtung 10 bei ihrer Aufwärtsbewegung das Gefäss mit den Dreiecksrastern 16 aus den Kerben 41 hebt.

Die Sicherung gegen ein Herauskippen der Gefässe 13 aus den Vertiefungen 18 der Dreiecksraster 16 übernehmen die Zahnraster 22, welche an den Stellen der Spitzen 17 der Dreiecksraster 16 selbige nahe deren Aussenseiten in geringem Abstand überlappen. Damit ist gleichzeitig ein Kippen des in den Lastaufnehmer 38 eingehängten Gefässes 13 möglich, da die Bogen 42 zwischen den Zähnen 43 des Zahnrasters 22 hoch genug ausgebildet sind, ein Herausfallen jedoch verunmöglicht.

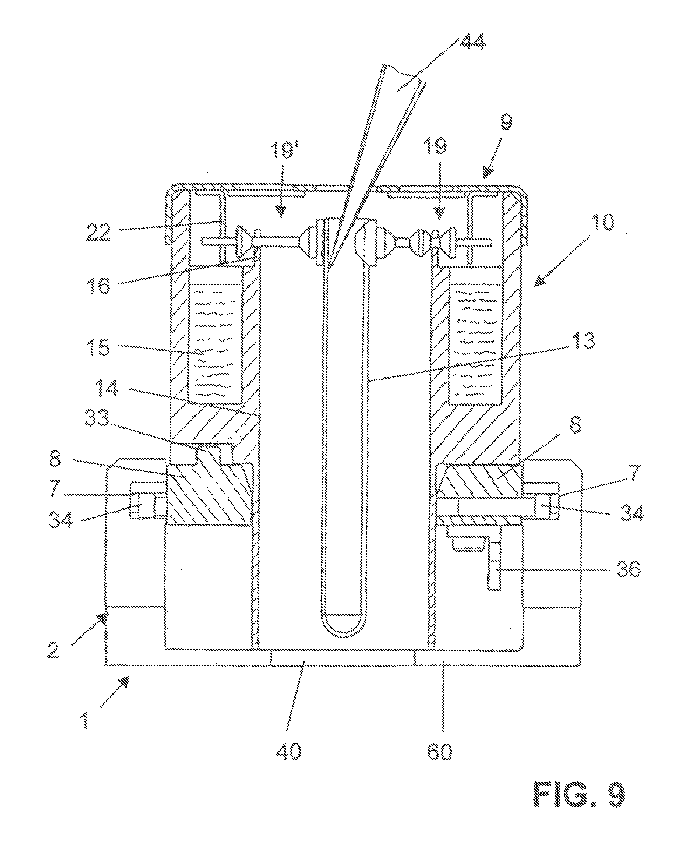

Die Figur 9 zeigt im Schnitt quer durch die Haltevorrichtung 10 das Befüllen eines Gefässes 13 mittels einer Pipettenspitze 44. Das Befüllen mittels einer Mehrkanal-Pipette kann entweder in Gefässe 13 einer ausserhalb der Transportvorrichtung 1 befindlichen Haltevorrichtung 10 erfolgen oder bei in der Transportvorrichtung 1 installierter Haltevorrichtung 10, in deren Startposition, d.h. solange sich noch kein Gefäss 13 auf dem Lastaufnehmer 38 befindet. Auf Grund des an den Spitzenabstand einer Mehrkanal-Pipette angepassten Abstandes der Gefässe 13 in der Haltevorrichtung 10 lassen sich sämtliche Kanäle einer Mehrkanal-Pipette gleichzeitig in die entsprechende Anzahl von Gefässen 13 entleeren. Damit entfällt der in dem Norm-Entwurf vorgesehene zeitaufwendige Arbeitsgang der Einzelabgabe des Prüfmediums für jeden individuellen Kanal und damit verbunden des n-fachen Befüllens einer Mehrkanal-Pipette mit n Kanälen. Es hat sich als nützlich erwiesen, vor und hinter den befüllten Gefässen 13 noch jeweils ein zusätzliches Gefäss 13 zur Erfassung der Verdunstungsrate in die Haltevorrichtung 10 einzubringen.

Der Messvorgang zum Kalibriervorgang mittels der beschriebenen Vorrichtung läuft beispielsweise wie folgt ab:

Die leeren Gefässe 13 werden nacheinander einer Tara-Wägung unterzogen, und die zu jedem Gefäss 13 gehörenden Tara-Gewichte werden beispielsweise in einer in der elektronischen Waage vorhandenen Speichereinheit gespeichert. Das erste und letzte Gefäss 13 werden, zur Ermittlung der Verdunstungsrate, mit einer definierten Menge der Prüfflüssigkeit gefüllt, zum Beispiel mittels einer bereits kalibrierten Pipette. Anschliessend wird das Prüfmedium mit der zu kalibrierenden Mehrkanal-Pipette in alle Kanäle aufgenommen und damit die übrigen Gefässe 13 in der Haltevorrichtung 10 gleichzeitig befüllt, wobei die Haltevorrichtung 10 entweder sich auf der Transportvorrichtung 1 befindet oder separat von dieser positioniert ist. Somit kann auch ein Befüllen auf Vorrat erfolgen, zum Beispiel während die Kalibriervorrichtung noch mit dem Abarbeiten einer vorangehenden Kalibriermessung oder der Tara-Wägung beschäftigt ist. Nachdem die Haltevorrichtung 10 in der Transportvorrichtung 1 im Schlitten 8 befestigt ist, wird das erste Gefäss 13 der Waage 37 zugeführt und gewogen. Dies kann beispielweise eines der oben erwähnten zusätzlichen Gefässe 13 zur Erfassung der Verdunstungsrate sein. Mit der automatischen Transportvorrichtung 1 wird nun das erste mit der Mehrkanal-Piptte befüllte Gefäss 13 der Waageschale 38 zugeführt und gewogen. Mit dem Wegtransportieren dieses Gefässes 13 von der Waageschale 38 wird ihr gleichzeitig ein zweites mit der Mehrkanal-Piptte befülltes Gefäss 13 zugeführt und anschliessend gewogen. Dieser Vorgang wiederholt sich für alle mit der Mehrkanal-Piptte befüllten Gefässe 13, wobei darauf zu achten ist, dass alle Gefässe 13 in identischer Weise auf dem Lastaufnehmer 38 platziert werden. Gerade dies gewährleistet jedoch die beschriebene Ausgestaltung der erfindungsgemässen Transportvorrichtung 1 mit ihrer Haltevorrichtung 10. Die Wägung des letzten Gefässes 13 dient wieder der Verdunstungserfassung, wobei eine zusätzliche Sicherheit entsteht, wenn die Transportrichtung umgekehrt, der Transport bis zum ersten Gefäss 13 zügig durchgeführt und das erste Gefäss 13 erneut gewogen wird. Die Verdunstung wird nun beispielsweise als linearer Term der Zeit in die Berechnung des Kalibriervolumens der Mehrkanal-Pipette mit einbezogen. Die Messdauer für jedes Gefäss 13 ist weitgehend konstant zu halten, um einerseits der Zeitkonstante der Waage 37 Rechnung zu tragen und andererseits die lineare Berechnung der Verdunstungsrate zu stützen. Auch sind Umgebungsparameter, wie Lufttemperatur, Luftdruck, Luftfeuchtigkeit mittels geeignet platzierter Sensoren zu bestimmen sowie auch die Temperatur des Prüfmediums. Der Luftdruck und insbesondere die Temperatur des Prüfmediums finden Eingang in die Berechnung des Prüfvolumens aus dessen Gewicht und der Dichte. Die anderen Parameter dienen der Kontrolle und Aufrechterhaltung konstanter Prüfbedingungen, insbesondere hinsichtlich der Verdunstungsrate der Prüfmediums.

Der beschriebene Ablauf einer Kalibriermessung sowie auch Variationen desselben können als Teil eines Computerprogramms in einer Speichereinheit der elektronischen Waage abgelegt sein.

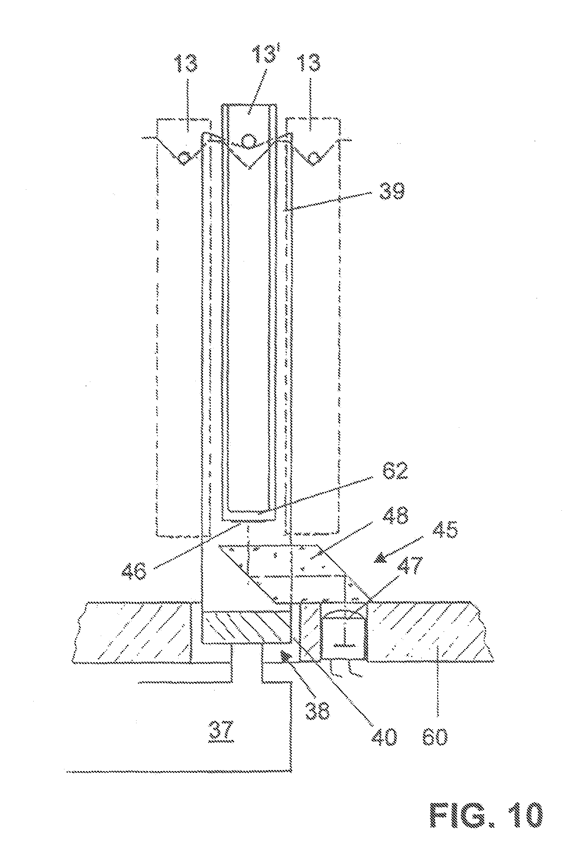

Die Figur 10 zeigt stark schematisiert, wie die Aufhängung eines sich auf dem Lastaufnehmer 38 befindlichen Gefässes 13' oberhalb der in der Haltevorrichtung 10 eingehängten Gefässe 13 angeordnet ist. Gleichzeitig ist eine Einrichtung zur Code-Erfassung 45 im unteren Bereich des Gehäuses 2 installiert, welche zum Beispiel Informationen über das Prüfmedium oder gegebenenfalls auch über die Gefässe 13, 13' aufnimmt. Diese Einrichtung zur Code-Erfassung 45 besteht aus einem am Gefässboden 62 angebrachten, beispielweise optischen Code 46, einem Sensorkopf 47, beispielsweise bestehend aus einer Laserdiode zur Aussendung von Licht, welches am Code 46 reflektiert wird, und einer Photodiode zur Aufnahme des am Code 46 reflektierten Lichts. Der Code kann ein Strich-Code oder ein Matrix-Code sein. Da der Sensorkopf 47 nicht direkt auf dem Lastaufnehmer 38 platziert sein sollte, bedarf es optischer Elemente, die das Licht auf dem Weg vom und zum Sensorkopf 47 in Bezug auf den Gefässboden umlenken. Dies kann, wie in der Figur 10 dargestellt, mittels eines Rhomboidprismas 48, welches in den Spalt zwischen den beiden Seitenflügeln 39 des Lastaufnehmers 38 hineinragt, erfolgen. Abhängig von der Geometrie der Anordnung lassen sich selbstverständlich auch andere optische Bauelemente zur Umlenkung des Lichts installieren. Auch muss die Einrichtung zur Code-Erfassung 45 nicht unbedingt optischer Natur sein, es kann sich auch um ein magnetisches oder ein mittels Radiowellen operierendes System handeln. Allerdings ist im Falle der Verwendung einer Wägezelle mit elektromagnetischer Kraftkompensation innerhalb der Waage 37, die optische Einrichtung zur Code-Erfassung 45 zu bevorzugen.

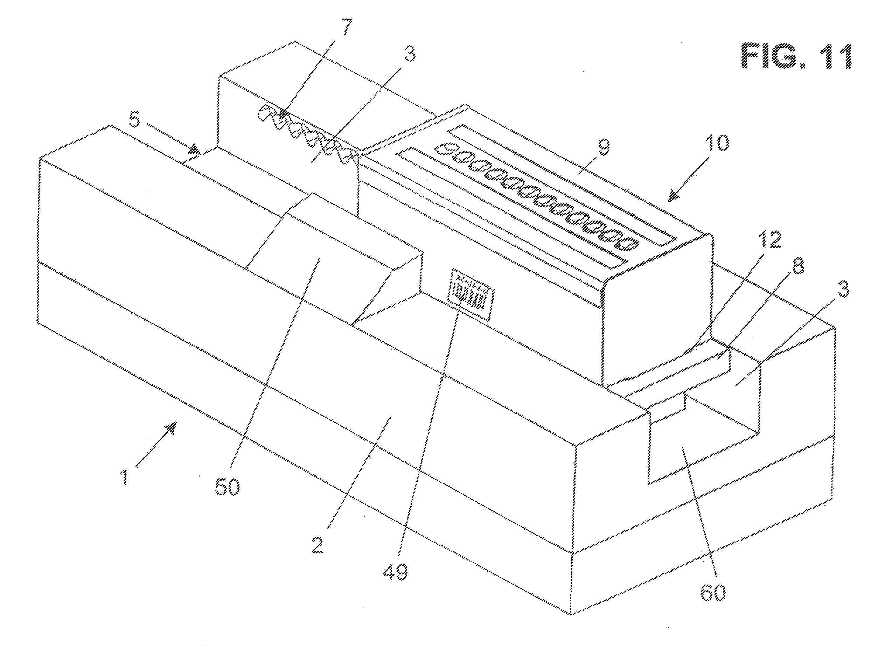

Eine Code-Erfassung muss jedoch nicht ausschliesslich an den Gefässen 13 stattfinden, sondern, es kann sich als sinnvoll erweisen, die gesamte Haltevorrichtung 10 mittels eines Codes, beispielweise eines Bar-Codes 49 oder auch eines Matrix-Codes, zu kennzeichnen und mittels eines Scanners 50 abzutasten, wie es in der Figur 11 dargestellt ist. Dabei ist der Bar-Code 49 seitlich an der Haltevorrichtung 10 angebracht und der Scanner 50 ist in gleicher Höhe in einem Aufsatz der Transportvorrichtung 1 untergebracht

Ein direktes Identifizieren einzelner Gefässe 13 oder auch einer gesamten Haltevorrichtung 10 mittels Codes ist besonders dann sinnvoll, wenn die Transportvorrichtung 1 nicht nur für die Verwendung zur Kalibrierung von Mehrkanal-Pipetten eingesetzt wird, sondern überall dort, wo in einem Labor eine Zuführung von Proben zu einer Messeinrichtung notwendig ist. Die Identifikation einer einzelnen Haltevorrichtung 10 ist notwendig, wenn diese von der Transportvorrichtung 1 trennbar ausgeführt ist und gleichzeitig mit mehreren Haltevorrichtungen 10 gearbeitet wird, beispielsweise die eine befüllt wird, während eine andere gerade vermessen wird.

Es lassen sich auch Transportsysteme vorstellen, welche die Haltevorrichtung auf einer geschlossenen Bahn, beispielsweise einer Kreisbahn der Messeinrichtung zuführen. Weiterhin ist es auch vorstellbar, dass die Haltevorrichtung 10 selbst kreisförmig ausgebildet ist, was insbesondere für die Zufuhr einer grösseren Menge von Gefässen zu einer Messeinrichtung nützlich ist.

### Bezugszeichenliste

- 1: Transportvorrichtung
- 2: Gehäuse
- 3: Innenwand
- 4: Unterseite
- 5: Transportbahn
- 6: Bogenraster
- 7: Transportraster
- 8: Schlitten
- 9: Deckel
- 10: Haltevorrichtung
- 11: Unterer Bereich
- 12: Aufnahme
- 13, 13': Gefäss
- 14: Seitenwand
- 15: Wanne
- 16: Dreiecksraster
- 17: Spitzen
- 18: Vertiefungen
- 19, 19': Haltestege
- 20: Öffnungen zum Befüllen
- 21: Sichtfenster
- 22: Zahnraster
- 23: Fassung
- 24, 24': Holmen
- 25: Innen-Konus
- 26: Aussen-Konus
- 27: Doppelkonus
- 28: Einstich
- 29: Rundes Prüfgefäss
- 30: Ovales Prüfgefäss
- 31: Längliches rechteckiges Gefäss

- 32: Kurzes rechteckiges Gefäss
- 33: Stift
- 34: Fortsatz
- 35: Antrieb
- 36: Antriebsrasterung
- 37: Waage
- 38: Lastaufnehmer
- 39: Seitenflügel
- 40: Öffnung
- 41: Kerbe
- 42: Bogen
- 43: Zahn
- 44: Pipettenspitze
- 45: Einrichtung zur Code-Erfassung
- 46: Optischer Code
- 47: Sensorkopf
- 48: Rhomboidprisma
- 49: Barcode
- 50: Scanner
- 51: Antriebsrad
- 52: Bolzen
- 53, 53': Haltesteg
- 54: Trapezförmiger Einschnitt
- 55: Trapezförmiger Einschnitt
- 56: Trapezförmiger Einschnitt
- 57: Achse
- 58: Drucksensor
- 59: Boden des Lastaufnehmers
- 60: Boden der Transportbahn
- 61: Bogen der Antriebsrasterung
- 62: Gefässboden

## Patentansprüche

1. Transportvorrichtung (1) zu einer Messeinrichtung mit einer Haltevorrichtung (10) für mit einer Flüssigkeit oder schüttfähigen Festkörpern füllbare Gefässe (13), in welcher Haltevorrichtung (10) die Gefässe (13) selbstzentrierend und einzeln handhabbar gehaltert sind, **dadurch gekennzeichnet, dass** die Haltevorrichtung (10) auf der Transportvorrichtung (1) transportierbar ausgestaltet ist und über Mittel zur Dämpfung der Gefässe (13) in Bezug auf eine auf diese einwirkende Auslenkung aus der Gleichgewichtslage verfügt und die Transportvorrichtung (1) mit Mitteln zur aufeinanderfolgenden Übergabe der Gefässe (13) an die Messeinrichtung ausgestattet ist, wobei gleichzeitig mit dem Entfernen eines Gefässes (13) von der Messeinrichtung die Zuführung des nächsten Gefässes (13) an die Messeinrichtung erfolgt.

2. Vorrichtung nach Anspruch 1, **dadurch gekennzeichnet, dass** die Gefässe (13) in einem definierten Abstand voneinander in der Haltevorrichtung (10) angeordnet sind.

3. Vorrichtung nach einem der Ansprüche 1 oder 2, **dadurch gekennzeichnet, dass** die Haltevorrichtung (10) ein Raster (16) mit Vertiefungen aufweist (18), in welche die Gefässe (13) mittels an ihrem oberen Ende befestigten, starren Haltestegen (19, 19') eingreifen.

4. Vorrichtung nach Anspruch 3, **dadurch gekennzeichnet, dass** die Haltestege (19, 19') aus den Umfang eines Gefässes (13) teilweise umschliessenden in einen Innen-Konus (25) übergehenden Fassungen und, nahe ihrem äusseren Ende einen Aussen-Konus (26) bildenden, Holmen (24, 24') bestehen.

5. Vorrichtung nach Anspruch 4, **dadurch gekennzeichnet, dass** mindestens einer der Holmen (24, 24') der Haltestege (19, 19') zusätzlich einen von innen nach aussen sich zunächst erweiternden und dann wieder verjüngenden Doppelkonus (27) aufweist und dass der Zwischenbereich zwischen dem Doppelkonus (27) und dem Aussen-Konus (26) einen Einstich (28) bildet, mit welchem der Haltesteg (19) in die Vertiefungen (18) des Rasters (16) eingreift.

6. Vorrichtung nach einem der Ansprüche 1 bis 5, **dadurch gekennzeichnet, dass** die Haltevorrichtung (10) von der Transportvorrichtung (1) trennbar ausgebildet ist.

7. Vorrichtung nach einem der Ansprüche 1 bis 6, **dadurch gekennzeichnet, dass** die Haltevorrichtung (10) einen Deckel (9) zur Vermeidung von Verschmutzung und Verdunstung aufweist.

8. Vorrichtung nach einem der Ansprüche 1 bis 7, **dadurch gekennzeichnet, dass** die Haltevorrichtung (10) nahe der Öffnungen der Gefässe (13) mindestens eine mit Prüfflüssigkeit befüllbare Wanne (15) zur Verringerung der Verdunstung durch Sättigung der umgebenden Luft aufweist.

9. Vorrichtung nach einem der Ansprüche 1 bis 8, **dadurch gekennzeichnet, dass** die Transportvorrichtung (1) für die Ausführung einer Vorwärts- und/oder einer Rückwärtsbewegung und gleichzeitig einer Heb- und Senkbewegung der Haltevorrichtung (10) ausgebildet ist.

10. Vorrichtung nach Anspruch 9, **dadurch gekennzeichnet, dass** ein einziger Antrieb (35) für die Ausführung einer Vorwärts- und/oder einer Rückwärtsbewegung und gleichzeitig einer Heb- und Senkbewegung der Haltevorrichtung (10) in der Transportvorrichtung (1) vorhanden ist.

11. Vorrichtung nach einem der Ansprüche 1 bis 10, **dadurch gekennzeichnet, dass** die Transportvorrichtung (1) einen Schlitten (8) und eine Transportbahn (5), in welcher sich der Schlitten (8) bewegt, aufweist und dass im Schlitten (8) eine Aufnahme (12) für die Haltevorrichtung (10) vorhanden ist.

12. Vorrichtung nach einem der Ansprüche 1 bis 11, **dadurch gekennzeichnet, dass** die Transportvorrichtung (1) mindestens ein Transportraster (7) aufweist, in welchem die Haltevorrichtung (10) oder der Schlitten (8) geführt wird.

13. Vorrichtung nach einem der Ansprüche 1 bis 12, **dadurch gekennzeichnet, dass** die Transportvorrichtung (1) über einen Positionssensor verfügt, zur Feststellung der aktuellen Stellung der Haltevorrichtung (10) oder des Schlittens (8) in der Transportvorrichtung (1).

14. Vorrichtung nach Anspruch 12 oder 13, **dadurch gekennzeichnet, dass** die Transportvorrichtung (1) von einem Gehäuse (2) umgeben ist und dass der Antrieb (35) am Gehäuse (2) befestigt ist und ein Antriebsrad (51) mit mindestens zwei Bolzen (52) sowie eine am Schlitten (8) oder an der Haltevorrichtung (10) angebrachte bogenförmige Antriebsrasterung (36) aufweist, wobei die Bolzen (52) in die Antriebsrasterung (36) eingreifbar ausgebildet sind, und wobei insbesondere die Antriebsrasterung (36), das Transportraster (7) und das Raster (16) der Haltevorrichtung (10) die gleiche Periode besitzen.

15. Vorrichtung nach einem der Ansprüche 1 bis 14, **dadurch gekennzeichnet, dass** die Haltevorrichtung (10) mittels der Transportvorrichtung (1) auf einer linearen Bahn geführt wird.

16. Vorrichtung nach einem der Ansprüche 1 bis 14, **dadurch gekennzeichnet, dass** die Haltevorrichtung (10) mittels der Transportvorrichtung (1) auf einer kreisförmigen Bahn geführt wird.

17. Vorrichtung nach einem der Ansprüche 1 bis 16, **dadurch gekennzeichnet, dass** die Gefässe (13) an ihrem Boden (62) einen Code (46) aufweisen und in der Transportvorrichtung (1) ein Sensorkopf (47) angeordnet ist und dass Mittel zum Übermitteln des Codesignals (48) vom Code (46) zum Sensorkopf (47) vorhanden sind.

18. Vorrichtung nach einem der Ansprüche 1 bis 16, **dadurch gekennzeichnet, dass** die Haltevorrichtung (10) einen Code (49) aufweist und an der Transportvorrichtung (1) in gleicher Höhe mit dem Code (49) eine Sensoreinrichtung (50) angeordnet ist.
